# EUROPEAN PATENT SPECIFICATION

(11) **EP 2 124 462 B1**
(45) Date of publication and mention of the grant of the patent: **17.07.2013**
(21) Application number: 07845835.3
(22) Date of filing: 06.12.2007
(51) Int. Cl.: H04W 48/12

(54) **A METHOD AND AN APPARATUS FOR USER EQUIPMENT TO ACQUIRE PARAMETERS**
VERFAHREN UND VORRICHTUNG ZUM BESCHAFFEN VON PARAMETERN FÜR EIN BENUTZERGERÄT
PROCÉDÉ ET APPAREIL PERMETTANT À UN ÉQUIPEMENT UTILISATEUR D'ACQUÉRIR DES PARAMÈTRES

(30) Priority: 17.01.2007 CN 200710000999
(43) Date of publication of application: 25.11.2009
(73) Proprietor: ZTE Corporation, Shenzhen, Guangdong 518057 (CN)
(72) Inventor: KE, Yazhu, Shenzhen Guangdong 518057 (CN); CHENG, Xiang, Shenzhen Guangdong 518057 (CN)
(74) Representative: Ilgart, Jean-Christophe
(86) International application number: PCT/CN2007/003475
(87) International publication number: WO 2008/089623

(56) References cited:
- EP-A2- 1 670 158
- WO-A1-03/094554
- CN-A- 1 859 707
- US-A1- 2006 240 766
- ERICSSON: "Transport Channel for enhanced CELL_FACH", 3GPP DRAFT; R2-070032, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133148, [retrieved on 2007-01-12]
- NSN ET AL: "Introduction of HS-DSCH reception in CELL_FACH, URA_PCH and CELL_PCH Document: discussion and decision", 4 May 2007 (2007-05-04), 3GPP DRAFT; R2-071693_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050134612, [retrieved on 2007-05-04] * paragraph [Discussion] * * paragraphs [06.3] - [8.1.1.6.6] * * paragraphs [8.5.25] - [8.5.p3] * * paragraph [10.2.48.8.8] *
- NOKIA: "Analysis of HSDPA in CELL_FACH state", 3GPP DRAFT; R1-062884, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20061004, 4 October 2006 (2006-10-04), XP050103368, [retrieved on 2006-10-04]

## Description

### Field of the Invention

The present invention relates to communication field, in particular to a method and apparatus for User Equipment (UE for short) to acquiring parameters, which can be used for acquiring parameters of High Speed Downlink Shared Channel (HS-DSCH for short) in the common state of enhanced connecting mode.

### Background of the Invention

To improve user data flow and system throughput, HS-DSCH is introduced into R5 standard protocol of 3GPP (3^{rd} Generation Partnership Project), and the physical channel mapped by this channel adopts time division and code division , and adopts technologies of HARQ (Hybrid Automatic Repeat Request) and AMC (Adaptive Modulation and Coding), so that peak rate can reach 10.8Mbps to 30Mbps. The final object of HS-DSCH is to increase system capacity and reduce transmission delay by providing high speed packet service access, thereby meeting user's QoS (Quality of Service) demand.

3GPP protocol standards enhance the forward access state in RRC (Radio Resource Control) connecting mode (CELL_FACH , Cell Forward Access Channel) and/or the paging state in RRC connecting mode (CELL_PCH , Cell Paging Channel /URA_PCH, UTRAN Registration Area Paging Channel), that is, HS-DSCH of HSDPA (High Speed Downlink Packet Access) technology can also be used in the states of CELL_FACH and/or CELL_PCH/URA_PCH, herein, using HSDPA technology in the states of CELL_FACH and/or CELL_PCH/URA_PCH is called the common state of enhanced connecting mode. When an UE is in the common state of enhanced connecting mode, as there is no dedicated process, the UE needs to know relevant parameters of the HS-DSCH in advance, so that the UE and the Base Station can correctly use the HS-DSCH to receive data.

The 3GPP document R2-070032 titled "Transport Channel for enhanced CELL_FACH" discloses to allocate the H-RNTI to the user and to decode the HS-DSCH and to receive the MAC PDU once data is scheduled on this H-RNTI.

The 3GPP document R1-062884 titled "Analysis of HSDPA in CELL_FACH state" discloses using HSDPA technology in the state of CELL_FACH.

Thus, a method and apparatus for acquiring parameters are desired so that the UE can acquire parameters of the HS-DSCH in the common state of the enhanced connecting mode.

### Summary of the Invention

In order to solve the above problem, the present invention provides a method and apparatus for acquiring parameters, which can be used for the UE to acquire parameters of HS-DSCH in a common state of enhanced connecting mode and to receive data on the HS-DSCH correctly, thereby the user's QoS can be guaranteed.

According to one aspect of the present invention, provides a method for acquiring parameters, for an UE to acquire parameters of HS-DSCH in a common state of enhanced connecting mode, and the method includes the following steps: step 102, informing the UE of the parameters of the HS-DSCH via a system broadcast message by means of a radio network controller; step 104, acquiring the parameters of the HS-DSCH from the system broadcast message by means of the UE; and step 106, receiveing data from the HS-DSCH according to the parameters of the HS-DSCH by means of the UE.

Preferably, the method for acquiring parameters further includes the following step: broadcasting via the system broadcast message in time when the parameters of the HS-DSCH change, by means of the radio network controller.

Preferably, the system broadcast message includes system broadcast message 5 and system broadcast message 6.

Preferably, the parameters of the HS-DSCH are layer 2 parameters.

Preferably, layer 2 parameters include one or any combination of the following parameters: media access control protocol data unit size, T1, and the window length of MAC-hs processing the HS-DSCH.

Preferably, there are one or more media access control protocol data unit sizes.

Preferably, T1 is a re-order release timer.

Preferably, the parameters of the HS-DSCH are associated with a media access control flow.

According to another aspect of the present invention, further provides an apparatus for acquiring parameters, for an UE to acquire the parameters of HS-DSCH in the common state of an enhanced connecting mode, comprises: an informing unit for informing the UE of the parameters of the HS-DSCH via a system broadcast message; an acquiring unit for acquiring the parameters of the HS-DSCH from the system broadcast message; and a receiving unit for receiving data from the HS-DSCH by the UE according to the parameters of the HS-DSCH.

Preferably, the system broadcast message includes system broadcast message 5 and system broadcast message 6.

Preferably, the parameters of the HS-DSCH are layer 2 parameters.

Preferably, the layer 2 parameters include one or any combination of: media access control protocol data unit size, T1, and the window length of MAC-hs (Media Access Control-high speed) processing the HS-DSCH.

Preferably, there is one or more media access control protocol data unit sizes.

Preferably, T1 is a re-order release timer.

The present invention enables the UE to acquire parameters of the HS-DSCH in the common state of the enhanced connecting mode, and thereby to use the correct parameters of the HS-DSCH to receive data. Therefore, it is convenient for the UE to receive the data on the HS-DSCH, and the user's QoS can be guaranteed.

Other characteristics and advantages of the present invention will be described in the following specification, and will be apparent partly from the specification and embodiments of the present invention. The objects and other advantages can be realized and obtained through the structure of the specification, claims, and the drawings.

### Brief Description of the Drawings

The drawings herein are used to provide further understanding of the present invention and constitute a part of this application. Exemplary embodiments of the present invention and the description thereof are used to describe the present invention and shall not be construed as improper limitations on the same. In the accompanying drawings:
Figure 1 is a flowchart of the method for acquiring parameters according to the present invention;
Figure 2 is a schematic view showing the method for acquiring the parameters of the HS-DSCH by the base station according to the embodiment of the present invention; and
Figure 3 is a block diagram of the apparatus for acquiring parameters according to the embodiment of the present invention.

### Detailed Description of the Preferred Embodiments

The preferred embodiment of the present invention will be described hereinafter in detail in conjunction with the drawings, and it should be understood that the preferred embodiment described herein is only used to describe and explain the present invention and is not intended to limit the same. If not conflict, the embodiments and the technical features of the embodiments can be combined together.

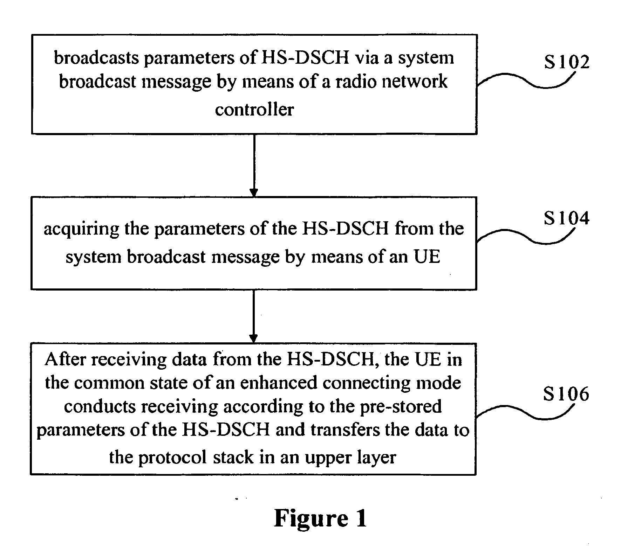

Figure 1 is a flowchart of the method for acquiring parameters according to the present invention, and as shown in Figure 1, the method for acquiring parameters includes the following steps:

step 102, a Radio Network Controller (RNC) informs an UE of parameters of a HS-DSCH via a system broadcast message, wherein, the system broadcast message includes system broadcast message 5 and system broadcast message 6, the parameters of the HS-DSCH are layer 2 parameters, and the layer 2 parameters include one or any combination of: media access control protocol data unit size, T1, and MAC-hs window length, and in addition, there is one or more media access control protocol data unit sizes;

step 104, the UE acquires the parameters of the HS-DSCH from the system broadcast message; and

step 106, the UE receives data from the HS-DSCH according to the parameters of the HS-DSCH.

In addition, the method for acquiring parameters further includes the following step: when the parameters of the HS-DSCH change, the RNC conducts broadcasting in the system broadcast message in time.

It needs to be pointed out that T1 is a re-order release timer, and the parameters of the HS-DSCH are associated with a media access control flow.

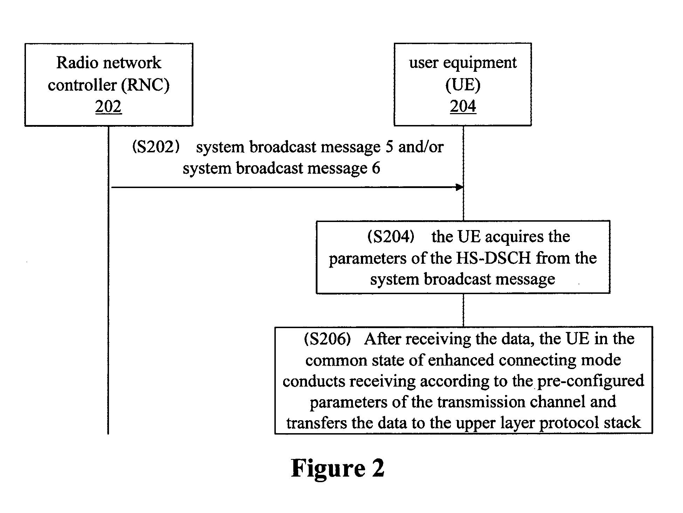

Figure 2 is a schematic view showing the method for acquiring the parameters of the HS-DSCH by the base station according to the embodiment of the present invention. Hereinafter RNC 202 and UE 204 will be taken as an example to describe the above method for acquiring parameters in detail in conjunction with Figure 2. As shown in Figure 2, the method for acquiring the parameters of the HS-DSCH includes the following steps:

S202, RNC 202 broadcasts the parameters of the HS-DSCH, which include media access control protocol data unit size (PDU SIZE), T1, and the MAC-hs window length and which are associated with the media access control flow to UE 204 via system broadcast message 5 and/or system broadcast message 6;

S204, UE 204 acquires the parameters of the HS-DSCH from the system broadcast messages; and

S206, after receiving data from the high speed physical downlink shared channel, UE 204 in enhanced CELL_FACH state conducts receiving according to the parameters of the HS-DSCH and transfers the data to the protocol stack in an upper layer.

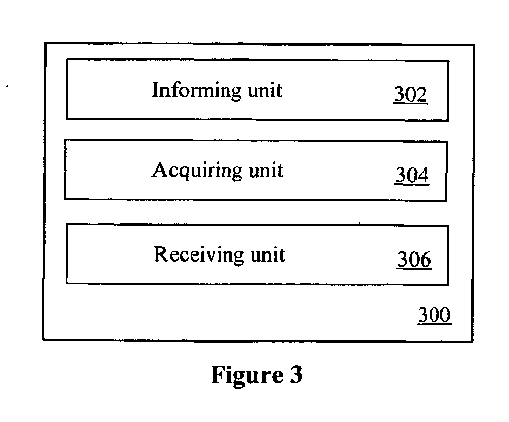

Figure 3 illustrates acquiring parameters apparatus 300 according to the embodiment of the present invention. As shown in Figure 3, acquiring parameters apparatus 300 includes: an informing unit 302 for informing the UE of the parameters of the HS-DSCH via a system broadcast message; an acquiring unit 304 for acquiring the parameters of the HS-DSCH from the system broadcast message; and a receiving unit 306 for receiving data from the HS-DSCH by the UE according to the parameters of the HS-DSCH.

According to the embodiment of the present invention, the system broadcast message includes system broadcast message 5 and system broadcast message 6; the parameters of the HS-DSCH are layer 2 parameters; and, the layer 2 parameters include one or any combination of: media access control protocol data unit size, T1, and the MAC-hs window length, wherein, T1 is a re-order release timer.

In addition, there is one or more media access control protocol data unit sizes.

In view of the above mentioned, the present invention enables the UE to acquire the parameters of the HS-DSCH in the common state of the enhanced connecting mode, and thereby to use correct parameters of the HS-DSCH to receive data. Therefore, it is convenient for the UE to correctly receive the data on the HS-DSCH, thus ensuring user's QoS.

The descriptions above are only preferable embodiments of the present invention, which are not used to restrict the present invention. For those skilled in the art, the present invention may have various changes and variations.

## Claims

1. A method for acquiring parameters, **characterized by**, for an UE to acquire parameters of High Speed Downlink Shared Channel, HS-DSCH, in a common state of enhanced connecting mode, comprising:
informing the UE of the parameters of HS-DSCH via a system broadcast message by means of a radio network controller (step 202);
acquiring the parameters of HS-DSCH from the system broadcast message by means of the UE (step 204); and
receiving data from HS-DSCH according to the parameters of the HS-DSCH by means of the UE (step 206);
further comprising: broadcasting via the system broadcast message in time when the parameters of the HS-DSCH change, by means of the radio network controller;
wherein the parameters of the HS-DSCH are associated with a media access control flow.

2. The method for acquiring parameters according to claim 1, **characterized in that** the system broadcast message includes system broadcast message 5 and system broadcast message 6.

3. The method for acquiring parameters according to claim 1, **characterized in that** the parameters of HS-DSCH are layer 2 parameters.

4. The method for acquiring parameters according to claim 3, **characterized in that** the layer 2 parameters include one or any combination of the following parameters: media access control protocol data unit size, T1, and the window length of MAC-hs processing the HS-DSCH.

5. The method for acquiring parameters according to claim 3, **characterized in that** there are one or more media access control protocol data unit sizes.

6. The method for acquiring parameters according to claim 4, **characterized in that** T1 is a re-order release timer.

7. An apparatus for acquiring parameters, **characterized by**, for an UE to acquire the parameters of High Speed Downlink Shared Channel, HS-DSCH, in the common state of enhanced connecting mode, comprising:
an informing unit for informing the UE of the parameters of HS-DSCH via a system broadcast message, and broadcasting via the system broadcast message in time when the parameters of the HS-DSCH change;
an acquiring unit for acquiring the parameters of HS-DSCH from the system broadcast message; and
a receiving unit for receiving data from the HS-DSCH according to the parameters of the HS-DSCH;
wherein the parameters of the HS-DSCH are associated with a media access control flow.

8. The apparatus for acquiring parameters according to claim 7, **characterized in that** the system broadcast message includes system broadcast message 5 and system broadcast message 6.

9. The apparatus for acquiring parameters according to claim 7, **characterized in that** the parameters of HS-DSCH are layer 2 parameters, which include one or any combination of the following parameters: media access control protocol data unit size, T1, and the window length of MAC-hs processing the HS-DSCH,
Wherein, there is one or more media access control protocol data unit sizes; and T1 is a re-order release timer.

## Patentansprüche

1. Verfahren zur Ermittlung von Parametern, **dadurch gekennzeichnet, dass**, um für ein Benutzergerät Parameter eines 'gemeinsam genutzten Hochgeschwindigkeits-Abwärtsstreckenkanals', HS-DSCH, zu beschaffen, und zwar in einem üblichen Zustand eines verbesserten Verbindungsmodus, es umfasst:
Informieren des Benutzergerätes über die Parameter von HS-DSCH mit Hilfe einer Systemrundfunknachricht mittels einer Funknetz-Steuereinrichtung (Schritt 202);
Beschaffen der Parameter von HS-DSCH von der Systemrundfunknachricht mittels des Benutzergerätes (Schritt 204); und
Empfangen von Daten von HS-DSCH gemäß den Parametern des HS-DSCH mittels des Benutzergerätes (Schritt 206);
weiter umfassend: Rundsenden mittels der Systemrundfunknachricht in einer Zeit, bei der die Parameter des HS-DSCH sich ändern, mittels der Funknetz-Steuereinrichtung;
wobei die Parameter des HS-DSCH einem Medienzugriffssteuerungsfluss zugehörig sind.

2. Verfahren zur Beschaffung von Parametern nach Anspruch 1, **dadurch gekennzeichnet, dass** die Systemrundfunknachricht Systemrundfunknachricht 5 und Systemrundfunknachricht 6 beinhaltet.

3. Verfahren zur Beschaffung von Parametern nach Anspruch 1, **dadurch gekennzeichnet, dass** die Parameter von HS-DSCH Schicht-2-Parameter sind.

4. Verfahren zur Beschaffung von Parametern nach Anspruch 3, **dadurch gekennzeichnet, dass** die Schicht-2-Parameter einen einzigen oder eine beliebige Kombination der folgenden Parameter beinhalten:
Medienzugriffssteuerungsprotokoll-Dateneinheitsgröße, T1, und die Fensterlänge eines MAC-hs, das den HS-DSCH verarbeitet.

5. Verfahren zur Beschaffung von Parametern nach Anspruch 3, **dadurch gekennzeichnet, dass** es eine oder mehrere Medienzugriffssteuerungsprotokoll-Dateneinheitsgrößen gibt.

6. Verfahren zur Beschaffung von Parametern nach Anspruch 4, **dadurch gekennzeichnet, dass** T1 ein Neuanweisungsfreigabezeitgeber ist.

7. Vorrichtung zur Ermittlung von Parametern, **dadurch gekennzeichnet, dass**, um für ein Benutzergerät Parameter eines 'gemeinsam genutzten Hochgeschwindigkeits-Abwärtsstreckenkanals', HS-DSCH, zu beschaffen, und zwar in einem üblichen Zustand eines verbesserten Verbindungsmodus, sie aufweist:
eine Informationseinheit zum Informieren des Benutzergerätes über die Parameter von HS-DSCH mit Hilfe einer Systemrundfunknachricht, und Rundsenden mit Hilfe der Systemrundfunknachricht in einer Zeit, bei der sich die Parameter des HS-DSCH ändern;
eine Beschaffungseinheit zum Beschaffen der Parameter von HS-DSCH von der Systemrundfunknachricht; und
eine Empfangseinheit zum Empfangen von Daten von HS-DSCH gemäß den Parametern des HS-DSCH;
wobei die Parameter des HS-DSCH einem Medienzugriffssteuerungsfluss zugehörig sind.

8. Vorrichtung zur Beschaffung von Parametern nach Anspruch 7, **dadurch gekennzeichnet, dass** die Systemrundfunknachricht Systemrundfunknachricht 5 und Systemrundfunknachricht 6 beinhaltet.

9. Vorrichtung zur Beschaffung von Parametern nach Anspruch 7, **dadurch gekennzeichnet, dass** die Parameter von HS-DSCH Schicht-2-Parameter sind, die einen einzigen oder eine beliebige Kombination der folgenden Parameter beinhalten: Medienzugriffssteuerungsprotokoll-Dateneinheitsgröße, T1, und die Fensterlänge eines MAC-hs, das den HS-DSCH verarbeitet,
wobei es eine oder mehrere Medienzugriffssteuerungsprotokoll-Dateneinheitsgrößen gibt; und T1 ein Neuanweisungsfreigabezeitgeber ist.

## Revendications

1. Procédé pour acquérir des paramètres, **caractérisé par** l'acquisition par un EU de paramètres de canal partagé de liaison descendante haut débit (HS-DSCH), dans un état commun de mode de connexion amélioré, comprenant :
informer l'EU des paramètres du HS-DSCH par le biais d'un message de diffusion système au moyen d'un contrôleur de réseau radiophonique (étape 202) ;
acquérir les paramètres du HS-DSCH à partir du message de diffusion système au moyen de l'EU (étape 204) ; et
recevoir les données provenant du HS-DSCH en fonction des paramètres du HS-DSCH au moyen de l'EU (étape 206) ;
consistant en outre à : diffuser par le biais du système un message de diffusion à temps lorsque les paramètres du HS-DSCH changent, au moyen du contrôleur de réseau radio ;
dans lequel les paramètres du HS-DSCH sont associés à un flux de contrôle d'accès au support.

2. Procédé pour acquérir des paramètres selon la revendication 1, **caractérisé en ce que** le message de diffusion système comprend le message de diffusion système 5 et le message de diffusion système 6.

3. Procédé pour acquérir des paramètres selon la revendication 1, **caractérisé en ce que** les paramètres du HS-DSCH sont des paramètres de couche 2.

4. Procédé pour acquérir des paramètres selon la revendication 3, **caractérisé en ce que** les paramètres de couche 2 comprennent l'un des paramètres suivants ou une combinaison de ceux-ci : taille de l'unité de données de protocole de contrôle d'accès au support, T1, et la longueur de fenêtre de traitement MAC-hs du HS-DSCH.

5. Procédé pour acquérir des paramètres selon la revendication 3, **caractérisé en ce qu'**il existe une ou plusieurs taille(s) de l'unité de données de protocole de contrôle d'accès au support.

6. Procédé pour acquérir des paramètres selon la revendication 4, **caractérisé en ce que** T1 est un temporisateur de déclenchement de réordonnancement.

7. Appareil pour acquérir des paramètres, **caractérisé par** l'acquisition par un EU de paramètres de canal partagé de liaison descendante haut débit (HS-DSCH), dans un état commun de mode de connexion amélioré, comprenant :
une unité d'information pour informer l'EU des paramètres de HS-DSCH par le biais d'un message de diffusion système et diffuser par le biais du système le message de diffusion à temps lorsque les paramètres du HS-DSCH changent ;
une unité d'acquisition pour acquérir les paramètres du HS-DSCH à partir du message de diffusion système ; et
une unité de réception pour recevoir des données du HS-DSCH en fonction des paramètres du HS-DSCH ;
dans lequel les paramètres du HS-DSCH sont associés à un flux de contrôle d'accès au support.

8. Appareil pour acquérir des paramètres selon la revendication 7, **caractérisé en ce que** le message de diffusion système comprend le message de diffusion système 5 et le message de diffusion système 6.

9. Appareil pour acquérir des paramètres selon la revendication 7, **caractérisé en ce que** les paramètres du HS-DSCH sont des paramètres de couche 2, qui comprennent l'un des paramètres suivants ou une de leurs combinaisons : taille de l'unité de données de protocole de contrôle d'accès au support, T1, et la longueur de fenêtre de traitement MAC-hs du HS-DSCH,
dans lequel il existe une ou plusieurs taille(s) de l'unité de données de protocole de contrôle d'accès au support ; et T1 est un temporisateur de déclenchement de réordonnancement.
